# EUROPÄISCHE PATENTSCHRIFT

(11) **EP 2 555 654 B1**
(45) Veröffentlichungstag und Bekanntmachung des Hinweises auf die Patenterteilung: **20.04.2016**
(21) Anmeldenummer: 11718254.3
(22) Anmeldetag: 23.02.2011
(51) Int. Cl.: A47B 31/06, A47B 31/02, B67D 1/00, B67D 1/04

(54) **SERVIERWAGEN ZUR AUFBEREITUNG UND AUSGABE VON GETRÄNKEN**
TROLLEY FOR PREPARING AND DISPENSING DRINKS
CHARIOT DE DESSERTE POUR PRÉPARER ET DISTRIBUER DES BOISSONS

(30) Priorität: 08.04.2010 DE 102010014392
(43) Veröffentlichungstag der Anmeldung: 13.02.2013
(73) Patentinhaber: Air-Eltec Patent UG, 35745 Herborn (DE)
(72) Erfinder: STRAUSS, Andreas, 35756 Mittenaar (DE)
(74) Vertreter: Kopf Westenberger Wachenhausen Patentanwälte PartG mbB
(86) Internationale Anmeldenummer: PCT/DE2011/000182
(87) Internationale Veröffentlichungsnummer: WO 2011/124192

(56) Entgegenhaltungen:
- EP-A1- 0 373 126
- WO-A1-2006/058713
- DE-A1- 19 847 366
- DE-U1-202008 005 701
- US-A- 4 068 781
- US-A- 4 076 349

## Beschreibung

Die Erfindung bezieht sich auf einen Servierwagen mit einem kastenförmigen Aufbau zur Aufnahme von Anordnungen zur Aufbereitung und Ausgabe von Getränken und Verzehrwaren, insbesondere für Verkehrsmittel zur individuellen Auswahl, Herstellung und Ausgabe von Getränken am Sitzplatz von Passagieren, wobei Wasserbehälter für kaltes und warmes Wasser und Vorratsbehälter mit unterschiedlichen Extrakten integriert sind und zur wahlweisen Ausgabe von Heiß- oder Kaltgetränken und aus den jeweiligen Wasserbehältern und das Extrakt über Verbindungsleitungen mittels Pumpanordnungen einer Zapfeinheit mit Zapfstellen zuführbar und in ein Trinkgefäss abfüllbar sind.

Es ist bekannt, Servierwagen dieser Art in unterschiedlichen Ausbildungen vorzusehen. Hierbei besteht der Mangel, dass eine Vielzahl von Ausgabeeinheiten entsprechend der angebotenen Getränkearten als Zapfeinheit vorhanden sein muss und somit das aufnehmende Trinkgefäss entsprechend unterschiedlich zu positionieren ist.

Eine Anordnung gemäss den gattungsbildenden Merkmalen ist nach der US 4,076,349 A bekannt. Hierbei sind aber für jedes Getränk getrennte Zapfstellen angeordnet und das Trinkgefäss ist entsprechend des Getränkes unterschiedlichen Positionen zuzuordnen. Es ist somit keine kompakte Anordnung möglich und es sind auch Fehlzuordnungen nicht auzuschliessen.

Es ist weiterhin nach der DE 198 47 366 A1 eine Anordnung bekannt, wobei in einer Position einsetzbares Trinkgefäss als Vorratsbehältnis lösliches Getränkepulver zugeführt und anschliessend heisses Wassers zugeführt wird.

Für einen Einsatz in Flugzeugen erfordern diese bekannten Anordnungen zusätzliche Massnahmen, da diese nicht in vorhandene Stauräume in der Galley einsetzbar sind und für Start und Landung eine entsprechend gesicherte Anordnung erfolgen kann.

Die Aufgabe der Erfindung ist es, eine bedienungssichere Befüllung von Trinkegefässen mit einer Auswahl unterschiedlicher Getränke durchzuführen und eine Anordnung zu schaffen, die einen Einsatz, auch in Luftfahrzeugen, unter Verwendung der vorhandenen Stauräume ermöglichen.

Die Lösung dieser Aufgabe erfolgt erfindungsgemäss durch den Gegenstand des Anspruchs 1.

Hierdurch wird eine Anordnung mit hohem Hygienestandard geschaffen, die auch für eine Flugzeugversorgung geeignet ist. Gleichzeitig wird ermöglicht, dass das Trinkgefäss, unabhängig von der Wahl des Getränkes, immer in derselben Position einsetzbar ist und somit Fehleinstellungen mit Überlaufen der Getränke und einer gegebenenfalls auftretenden Beeinträchtigung der Passagiere vermieden wird.

Zur Erhöhung der Kapazität und Bedienung von zwei Seiten ist vorgesehen, dass zwei parallel zugeordnete Zapfeinheiten angeordnet sind.

Ferner wird vorgeschlagen, dass die Pumpen durch eine Stromquelle, wie eine Batterie, und/oder eine Gasflasche, betrieben werden.

Eine vorteilhafte Ausbildung wird dadurch geschaffen, dass die Gasflasche ein CO2-Gas enthält, das zur Kaltwassercarbonisierung und/oder als Pumpenantrieb eingesetzt ist.

Zur einfachen Bedienung und zentralen Steuerung wird vorgeschlagen, dass die Auswahl der Getränke mit der Zuführung von Extrakten und des Wassers aus dem zugeordneten Wasserbehälter sowie der einzelnen Zuführleitungen mit zugeordneten Pumpen über eine Steuerelektronikeinheit mit einem Bedientableau durchführbar ist.

Weiterhin ist vorgesehen, dass die Vorratsbehälter für die einzelnen Extrakte als Batterie an der versenkbaren Zapfeinheit austauschbar angeordnet sind.

In der Zeichnung sind Ausführungsbeispiele der Erfindung schematisch dargestellt. Es zeigen:
Fig. 1 eine Seitenansicht eines Servierwagens mit der Zapfeinheit in einer Arbeitsposition und integrierten Extraktbehältern;
Fig. 2 eine Vorderansicht gemäss Fig. 1;
Fig. 3 eine Vorderansicht wie Fig. 2 mit abgesenkter Zapfeinheit;
Fig. 4 ein weiteres Ausführungsbeispiel mit einer Seitenansicht eines Servierwagens gemäss Fig. 1 und Extraktbehältern im Servierwagen;
Fig. 5 eine Vorderansicht gemäss Fig. 4;
Fig. 6 eine Vorderansicht gemäss Fig. 5 mit abgesenkter Zapfeinheit;
Fig. 7 eine Zapfeinheit bestehend aus zwei parallel angeordneten Einheiten;
Fig. 8 eine Draufsicht auf einen Zapfkopf mit einer Vielzahl von Zuführöffnungen;
Fig. 9 einen Funktionsaufbau zur Ausgabe eines Saftgetränkes;
Fig. 10 einen Funktionsaufbau zur Ausgabe eines Heissgetränkes und
Fig. 11 einen Funktionsaufbau zur Ausgabe eines Saftgetränkes.

Der dargestellte Servierwagen 1 ist in Form eines Trolleys zur Getränkeversorgung im Flugzeug ausgebildet. Hierzu ist ein isolierter Behälter 2 für Heisswasser und ein Behälter 3 für Kaltwasser im Servierwagen angeordnet. Zusätzlich sind eine Stromversorgung 4 in Form eines Akkus und eine CO2-Kartusche 5 angeordnet, wobei eine Zapfeinheit 6 mit einer Zapfstelle 7 über ein nicht näher ausgeführtes Liftsystem von einer Arbeitsposition in eine Magazinposition innerhalb des Servierwagens 1 unterhalb einer oberen Begrenzungsfläche absenkbar ist.

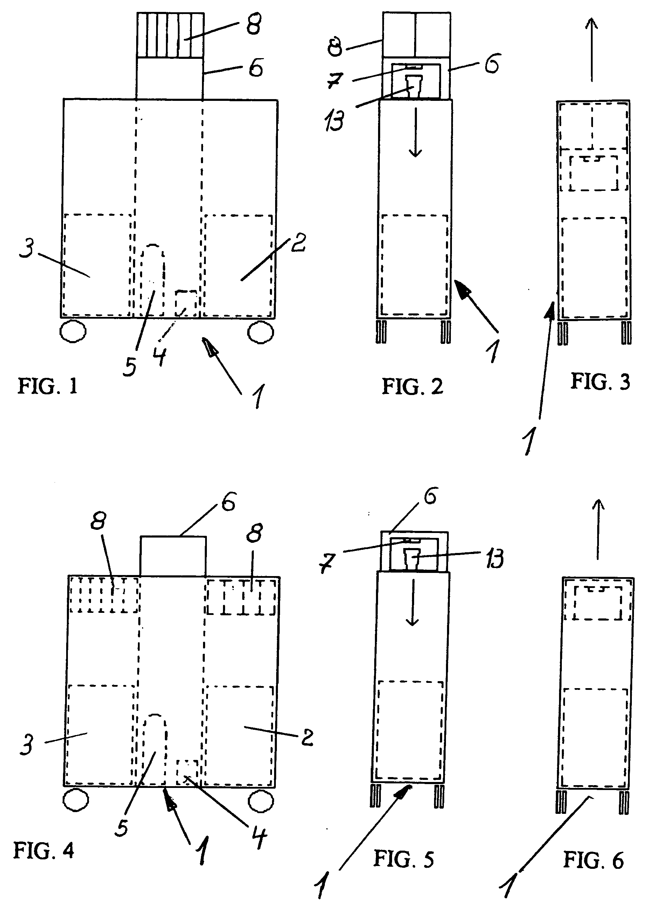

Ferner sind entsprechende Extrakte für die Herstellung von Getränken als Batterie 8 aus unterschiedlichen Behältern 9, 10, 11 im Ausführungsbeispiel gemäss Fig. 1 bis 3 in der absenkbaren Zapfeinheit 6 integriert, während in der Ausführung gemäss Fig. 4 bis 6 die Batterie 8 im Servierwagen 1 angeordnet ist.

Die Zapfstelle 7 wird durch einen Zapfkopf 12 gebildet und ist oberhalb einer Aufnahme für ein zu befüllendes Trinkgefäss 13 angeordnet. Der Zapfkopf 12 besitzt eine Vielzahl von Zuführöffnungen 14, die alle im Bereich der Aufnahmeöffnung des eingesetzten Trinkgefässes 13 liegen. Jede Zuführöffnung 14 besitzt eine getrennte Zuführleitung 15 und ist unter Zwischenschaltung von Pumpen 16 mit den Behältern 2, 3 für Wasser sowie den einzelnen Behältern 9, 10, 11 mit den unterschiedlichen Extrakten der eingesetzten Batterie 8 zur Getränkeherstellung verbunden.

Über eine bekannte Ausbildung einer zentralen elektronischen Steuereinheit 17 mit einem Bedientableau für eine Wahl des abzufüllendes Getränkes am Servierwagen 1 werden die entsprechenden Sirupbehälter 9, 10, 11 und die Wasserbehälter 2, 3 sowie die CO2-Kartusche 5 angesteuert und mittels der zugeordneten gesteuerten Pumpen 16 wahlweise die Zutaten für ein ausgewähltes Getränk über die Zuführöffnungen 14 des Zapfkopfes 12 einem Trinkgefäss 13 in der vorgesehenen Menge gesteuert zugeführt.

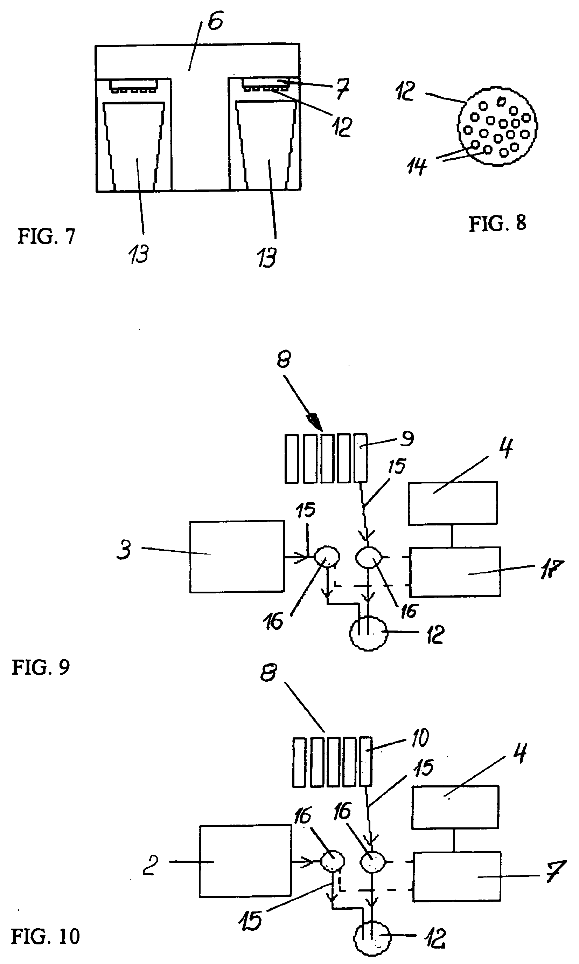

Zur Verdeutlichung des Systems wird die Ausgabe unterschiedlicher Getränke erläutert. Gemäss Fig. 9 wird die Ausgabe eines Saftgetränkes prinzipiell erläutert. Hierzu wird der Behälter 3 für Kaltwasser und der Behälter 9 der Batterie 8 mit dem Saftextrakt angesteuert, die über getrennte Zuführleitungen 15 mit separaten Zuführöffnungen 14 des Zapfkopfes 12 verbunden sind. Die Materialzuführung wird über Pumpen 16 der Zuführleitungen 15 gesteuert, die über die Steuereinheit 17 nach Auswahl der Getränkeart und Menge ausgeführt wird. Hierbei erfolgt die elektrische Versorgung durch die zugeordnete Stromversorgung 4 als Akku im Servierwagen 1.

Bei einer Ausgabe eines Heissgetränkes gemäss Fig. 10 wird der Behälter 2 für Heisswasser und der Behälter 10 mit Kaffee- oder Teekonzentrat entsprechend über die Steuereinheit 17 angesteuert, die über die Zuführleitungen 15 und Pumpen 16 mit den Zuführöffnungen 15 des Zapfkopfes 12 verbunden sind.

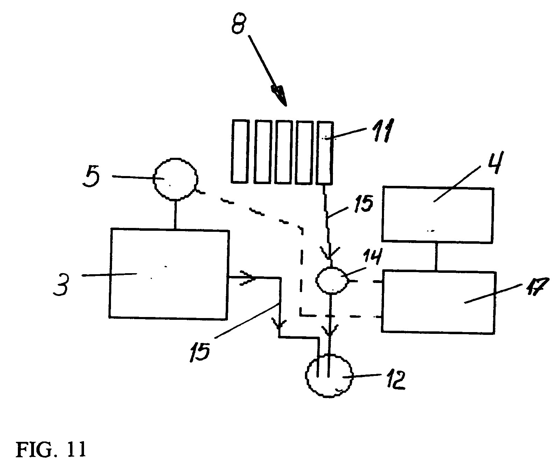

Ferner ist gemäss Fig. 11 eine Ausgabe eines Saftgetränkes ausgeführt. Hierbei wird der Behälter 3 für Kaltwasser mit der CO2-Kartusche 5 sowie der Behälter 11 mit dem entsprechenden Extrakt über die Steuereinheit 17 angesteuert und über die an die Zuführöffnungen 14 des Zapfkopfes 12 angeschlossenen Zuführleitungen 15 mittels der Pumpe 14 sowie der Kartusche 5 zur Carbonisierung die Getränkeanteile in Form von Wasser und Extrakt zugeführt. Selbstverständlich kann auch zusätzlich eine Pumpe für das Wasser eingeschaltet werden.

## Patentansprüche

1. Servierwagen (1) mit einem kastenförmigen Aufbau zur Aufnahme von Anordnungen zur Aufbereitung und Ausgabe von Getränken und Verzehrwaren, insbesondere für Verkehrsmittel zur individuellen Auswahl, Herstellung und Ausgabe von Getränken am Sitzplatz von Passagieren, wobei der Servierwagen (1) Wasserbehälter (2, 3) für kaltes und warmes Wasser und Vorratsbehälter (9, 10, 11) mit unterschiedlichen Extrakten aufweist, die in diesem integriert sind, und wobei der Servierwagen (1) des Weiteren wenigstens eine Zapfeinheit (6) mit einer Zapfstelle (7), die durch einen Zapfkopf (12) gebildet wird, eine Aufnahme für ein zu befüllendes Trinkgefäß (13), Zuführleitungen (15) zwischen den jeweiligen Wasserbehältern (2, 3) und dem Zapfkopf (12) (6) bzw. den Vorratsbehältern (9, 10, 11) und dem Zapfkopf (12) , und Pumpanordnungen (16) aufweist, wobei zur wahlweisen Ausgabe von Heiß- oder Kaltgetränken Wasser aus den jeweiligen Wasserbehältern (2, 3) und das Extrakt über die Zuführleitungen (15) mittels der Pumpanordnungen (16) der Zapfeinheit (6) an den Zapfkopf (12) zuführbar und in das in die Aufnahme eingesetzte Trinkgefäß abfüllbar sind, **dadurch gekennzeichnet, dass** die Zapfstelle (7) aus einer oberen Arbeitsposition in eine absenkbare Magazinposition in den Aufbau des Servierwagens (1) unterhalb einer oberen Begrenzungsfläche einstellbar ist und der Zapfkopf (12) mehrere Zuführöffnungen (14) oberhalb der Aufnahme für das zu befüllende Trinkgefäß (13) aufweist, wobei jede Zuführöffnung (14) des Zapfkopfes (12) mit einer getrennten Zuführleitung (15) für unterschiedliche Getränke aus heißem Wasser, kaltem Wasser und Extrakte verbunden und steuerbar ist sowie alle Zuführöffnungen (14) im Bereich der Aufnahmeöffnung des in die Aufnahme einsetzbaren Trinkgefäßes (13) zur Befüllung in einer alleinigen Aufnahmeposition angeordnet sind.

2. Servierwagen nach Anspruch 1, **dadurch gekennzeichnet, dass** zwei parallel zugeordnete Zapfeinheiten (6) angeordnet sind.

3. Servierwagen nach Anspruch 1 oder 2, **dadurch gekennzeichnet, dass** die Pumpen (16) durch eine Stromquelle (4), wie eine Batterie, und/oder eine Gasflasche (5), betrieben werden.

4. Servierwagen nach einem der Ansprüche 1 bis 3, **dadurch gekennzeichnet, dass** die Gasflasche ein Co2-Gas enthält, das zur Kaltwassercarbonisierung und/oder als Pumpenantrieb eingesetzt ist.

5. Servierwagen nach einem der Ansprüche 1 bis 4, ferner mit einer Steuerelektronik (7) und einem Bedientableau, wobei die Auswahl der Getränke mit der Zuführung von Extrakten (9, 10, 11) und des Wassers aus dem zugeordneten Wasserbehälter (2, 3) sowie der einzelnen Zuführleitungen (15) mit zugeordneten Pumpen (16) über die Steuerelektronikeinheit (7) mit dem Bedientableau durchführbar ist.

6. Servierwagen nach einem der Ansprüche 1 bis 5, **dadurch gekennzeichnet, dass** die Vorratsbehälter für die einzelnen Extrakte (9, 10, 11) als Batterie (8) an der versenkbaren Zapfeinheit (6) austauschbar angeordnet sind.

## Claims

1. Serving trolley (1) having a box-shaped structure for receiving assemblies for preparing and dispensing beverages and items for consumption, in particular for transportation means for the individual selection, production and dispensing of beverages at the seats of passengers, the serving trolley (1) comprising water containers (2, 3) for cold and hot water, and storage containers (9, 10, 11) having different extracts, which containers are integrated in said serving trolley, and the serving trolley (1) further comprising at least one dispensing unit (6) having a dispensing point (7) which is formed by a dispensing head (12), a receptacle for a drinking vessel (13) which is to be filled, supply lines (15) between the respective water containers (2, 3) and the dispensing head (12) and between the storage containers (9, 10, 11) and the dispensing head (12), and pump assemblies (16), it being possible to supply both water from the respective water containers (2, 3) and the extract to the dispensing head (12) via the supply lines (15) by means of the pump assemblies (16) of the dispensing unit (6) for selectively dispensing hot or cold beverages, and it being possible to pour said water and extract into the drinking vessel placed in the receptacle, **characterised in that** the dispensing point (7) can be adjusted from an upper operating position into a lowerable storage position into the structure of the serving trolley (1) below an upper boundary surface, and the dispensing head (12) comprises a plurality of supply openings (14) above the receptacle for the drinking vessel (13) to be filled, each supply opening (14) of the dispensing head (12) being connected to a separate supply line (15) for different beverages produced from hot water, cold water and extracts and being controllable, and all the supply openings (14) being arranged, for the filling process, in an individual receiving position in the region of the receiving opening of the drinking vessel (13) which can be placed in the receptacle.

2. Serving trolley according to claim 1, **characterised in that** two dispensing units (6) are arranged so as to be associated in parallel.

3. Serving trolley according to either claim 1 or claim 2, **characterised in that** the pumps (16) are operated by means of a power source (4), such as a battery and/or a gas bottle (5).

4. Serving trolley according to any of claims 1 to 3, **characterised in that** the gas bottle contains CO₂ gas which is used for cold-water carbonisation and/or for driving the pumps.

5. Serving trolley according to any of claims 1 to 4, further comprising control electronics (7) and an operating panel, wherein the drinks to which extracts (9, 10, 11) are added and the water from the associated water containers (2, 3) and the individual supply lines (15) having associated pumps (16) are selected by means of the control electronics unit (7) comprising the operating panel.

6. Serving trolley according to any of claims 1 to 5, **characterised in that** the storage containers for the individual extracts (9, 10, 11) are arranged in a replaceable manner in a block (8) on the lowerable dispensing unit (6).

## Revendications

1. Conteneur roulant (1) avec une structure en forme de caisson pour recevoir des agencements destinés à la préparation et à la distribution de boissons et de produits consommables, en particulier pour des moyens de transport pour le choix individuel, la préparation et la distribution de boissons à la place assise de passagers, le conteneur roulant (1) présentant des réservoirs d'eau (2, 3) pour de l'eau froide et de l'eau chaude et des réservoirs (9, 10, 11) avec différents extraits, intégrés dans ce conteneur, et le conteneur roulant (1) présentant en outre au moins une unité de distribution (6) avec point de puisage (7), formé par une tête de distribution (12), un logement pour un récipient pour boisson (13) à remplir, des conduites d'alimentation (15) entre les réservoirs d'eau respectifs (2, 3) et la tête de distribution (12) et/ou entre les réservoirs (9, 10, 11) et la tête de distribution (12), et des agencements de pompage (16), conteneur roulant dans lequel, pour la distribution sélective de boissons chaudes ou froides, de l'eau des réservoirs d'eau respectifs (2, 3) et de l'extrait peuvent être envoyés, par l'intermédiaire des conduites d'alimentation (15), au moyen des agencements de pompage (16), dans l'unité de distribution (6) sur la tête de distribution (12) et être remplis dans le récipient pour boisson mis en place dans le logement, **caractérisé en ce que** le point de puisage (7) est réglable d'une position de travail supérieure dans une position de magasin abaissable dans la structure du conteneur roulant (1) au-dessous d'une surface de délimitation supérieure et la tête de distribution (12) présente plusieurs orifices d'alimentation (14) au-dessus du logement pour le récipient pour boisson à remplir (13), chaque orifice d'alimentation (14) de la tête de distribution (12) étant relié à une conduite d'alimentation séparée (15) pour différentes boissons en eau chaude, froide et extraits et pouvant être contrôlé, et tous les orifices d'alimentation (14) étant disposés dans la zone de l'ouverture de réception du récipient pour boisson (13), pouvant être mis en place dans le logement, pour le remplissage dans une position de réception unique.

2. Conteneur roulant selon la revendication 1, **caractérisé par** la disposition de deux unités de distribution (6) associées en parallèle.

3. Conteneur roulant selon l'une des revendications 1 et 2, **caractérisé en ce que** les pompes (16) fonctionnent par une source de courant (4), telle qu'une batterie, et/ou une bouteille de gaz (5).

4. Conteneur roulant selon l'une des revendications 1 à 3, **caractérisé en ce que** la bouteille de gaz renferme un gaz CO_{z}, utilisé pour la carbonatation d'eau froide et/ou en tant qu'entraînement de pompe.

5. Conteneur roulant selon l'une des revendications 1 à 4, comprenant en outre une électronique de commande (7) et un tableau de commande, le choix des boissons avec l'arrivée d'extraits (9, 10, 11) et de l'eau des réservoirs d'eau (2, 3) associés, ainsi que des conduites d'alimentation individuelles (15) par les pompes (16) associées, étant réalisable par l'unité électronique de commande (7) avec le tableau de commande.

6. Conteneur roulant selon l'une des revendications 1 à 5, **caractérisé en ce que** les réservoirs pour les extraits individuels (9, 10, 11) sont disposés de manière interchangeable, sous forme de batterie (8), sur l'unité de distribution (6) abaissable.
